# EUROPEAN PATENT SPECIFICATION

(11) **EP 3 832 822 B1**
(45) Date of publication and mention of the grant of the patent: **16.08.2023**
(21) Application number: 19212977.3
(22) Date of filing: 02.12.2019
(51) Int. Cl.: H02G 7/00, H02G 1/02

(54) **SYSTEM FOR ATTACHING A DEVICE ONTO AN OVERHEAD POWER LINE**
SYSTEM ZUR ANBRINGUNG EINER VORRICHTUNG AN EINE FREILEITUNG
SYSTÈME DE FIXATION D'UN DISPOSITIF SUR UNE LIGNE ÉLECTRIQUE AÉRIENNE

(43) Date of publication of application: 09.06.2021
(73) Proprietor: Ampacimon S.A., 4460 Grâce-Hollogne (BE)
(72) Inventor: Mitcan, Daniel, 5626 GK Eindhoven (NL); Vassort, Frédéric, 1310 La Hulpe (BE)
(74) Representative: AWA Benelux

(56) References cited:
- WO-A1-2019/171231
- US-A1- 2018 261 925
- US-A1- 2019 315 464

## Description

### Field of the Invention

The present invention relates to a system for attaching a device onto an overhead (high voltage) power line, said device preferably comprising one or more sensors to ensure the monitoring of the overhead power line.

The invention also relates to a device provided with the attachment system, as well as to the use of said device for mounting said device onto the power line.

### Background and Prior Art

Monitoring devices are frequently installed upon electrical distribution lines in power grids to support power line monitoring and other power management activities. In modern designs, the current sensor electronics, as well as means for communicating with the grid operator and other device components, are contained within a housing that is mounted upon the electrical distribution line itself. The mounting mechanism may be in the form of adjustable paired-jaw clamp mechanisms such as those disclosed in US 4,689,752. Generally, the monitoring devices can be positioned and mounted essentially by hand. Alternatively, the devices may be positioned and mounted using tools.

Frequently, such monitoring devices are installed upon pre-existing power distribution lines. As a result, it is inconvenient, if not practically impossible, to power down the distribution line prior to installing the device. On-premise installation is done by means of dedicated trucks equipped with isolated lifts and/or by helicopters approaching the line. Line workers must manipulate the mounting mechanism while wearing specialized, heavy attire such as insulated gloves and sleeves, or by using insulated stand-off tools such as a so-called "hot stick". Such devices may behave however like a pendulum, appearing less safe when buffeted by the wind, and requiring more careful consideration concerning positioning. Monitoring devices incorporating clamp mechanisms, on the other hand, frequently require multiple tools and/or multiple separate handling steps on different portions of the device and mechanism, in order to position, clamp, and, where necessary, lock the device during installation.

Document US 2019/315464 A1 discloses an unmanned aerial vehicle for mounting a clamp to a line including a body, a first propeller attached to the body, a second propeller attached to the body, and a third propeller attached to the body. The body is between at least one of the first propeller and the second propeller, the first propeller and the third propeller, or the second propeller and the third propeller. A guide is attached to the body and is configured to support the clamp for mounting to the line by flying the unmanned aerial vehicle toward the line. The guide is configured to support the clamp such that an imaginary clamp line between a first jaw of the clamp and a second jaw of the clamp when the clamp is in an arrested position is non-parallel to a plane intersecting the first propeller, the second propeller, and the third propeller.

Aspects of the subject disclosure in document US 2018/261925 A1 may include, for example, a housing defining an open volume therein where the housing includes a connection structure for connecting with a utility structure, a first wireless device contained in the housing where the first wireless device is coupled with a first antenna extending outside of the housing, and a second wireless device contained in the housing where the second wireless device is coupled with a second antenna extending outside of the housing. The first and second wireless devices can be coupled to each other.

Document WO 2019/171231 A1 discloses a system, a method, and/or a computer program for mounting a cable device on an electric cable of an electric grid, and dismounting therefrom, the mounting device including a first coupling part arranged to attach the mounting device to a flying vehicle, a second coupling part arranged to attach the cable device to the mounting device, and a navigation part operative to enable a user to navigate the flying vehicle so as to direct a slot of the cable device to the electric cable, and/or automatically navigate the flying vehicle to direct the slot of the cable device to the electric cable, and/or enable a user to navigate the flying vehicle to the cable device, and/or automatically navigate the flying vehicle to the cable device.

### Aims of the Invention

The invention aims to provide a solution to at least one drawback of the teaching provided by the prior art.

More specifically, the invention aims to provide a solution to improve the mounting conditions of a device that wraps around an overhead power line.

### Summary of the invention

For the above purpose, the invention is directed to a device adapted to be mounted onto an energized overhead power line, comprising a casing, the casing being composed of at least a first half and a second half, said halves being linked by a mechanism positioned there between, wherein the mechanism is positioned between a proximal end of the first half of the casing and a proximal end of the second half of the casing, wherein the mechanism comprises at least one hinge having an axis of rotation along the proximal end of the first half of the casing and the proximal end of the second half of the casing, the mechanism being arranged so that said halves are held in at least an open position, creating an opening in which said line can be guided and positioned and a closed position, in which said halves are mated, wherein said halves respectively comprise a first half and a second half of a magnetic split-core, characterised in that the device additionally comprises at least one strap, through which the halves of the casing are further connected to each other, said strap being configured to mate also with said overhead power line in order to perform a clamping of the device onto said line, when said line is energized, wherein a length of the at least one strap is determined so that for allowing the at least one strap to guide and align the power line excursion between the haves of the casing, so that said halves are toggled in the closed position when the haves of the magnetic split-core surround said line due to an electromagnetic attraction between the halves of said split-core.

Still according to the invention :
- an end of the at least one strap is connected to a distal end of the first half of the casing and the other end of said strap is connected to a distal end of the second half of the casing ;
- each half of the casing has the form of a shell delimited by a rim, wherein the ends of the at least one strap are connected to the respective rims.

According to preferred embodiments of the invention, the device comprises one or more of the following technical features, taken in isolation or any combination thereof:
- a median line of the at least one strap extends in a plane perpendicular to the rotation axis of the hinge mechanism ;
- the centre of the at least one strap is positioned in a median plane of the casing, said plane comprising the rotation axis of the hinge mechanism ;
- the central axis of the magnetic split-core is parallel to the rotation axis of the hinge mechanism, when the casing is in closed position ;
- the at least one strap is positioned adjacent to the first and second halves of the magnetic split-core in a direction along the rotation axis of the hinge mechanism ;
- the device comprises at least one rib and/or at least one pre-bias spring spanning across the magnetic split-core for pressing a portion of the overhead power line when the casing is in the close position ;
- the device further comprises a split-core transformer comprising the first and second halves of the magnetic split-core ;
- each half of the magnetic split-core is shaped as a half torus, each half of said split-core presenting two flat ends ;
- the halves of said split-core define a magnetic circuit with no air gap, when the two ends of the first half of the magnetic split-core are respectively facing the two ends of the second half of the magnetic split-core ;
- the device further comprises a processor, a communication unit, preferably a wireless communication unit, a battery and at least one sensor for detecting one or more conditions on the overhead power line, or any combination thereof;
- the least one sensor comprises a current sensor, an acceleration sensor, a temperature sensor, a magnetic field sensor, an electric field sensor, a camera, a Lidar (Light Detection and Ranging), or any combination thereof;
- the device comprises a resilient element, preferably a spring interposed between the two halves of the casing to bias the two halves of the casing in a predefined position before the mounting thereof;
- the device comprises at least one snap fit with a male portion being attached to the distal end of the first half of the casing and a female portion being attached to the distal end of the second half of the casing or vice versa ;
- the distal end of the first half of the casing and the distal end of the second half of the casing each comprise a cut off and/or a ramp defining a groove for forcing the opening of the halves of the casing ;
- the hinge mechanism comprises a barrel hinge, concealed hinge, with or without self-closing feature and/or with or without damping systems, or a living hinge ;
- the at least one strap is made of non-conducting synthetic material, preferably polyimide ;
- each rim defines two recesses formed on two lateral sides thereof for receiving the overhead power line;
- the device further comprises an automatic mechanical clamping mechanism triggered by a contact sensor detecting a contact with said line, wherein the energy necessary to close the halves is stored in a pre-bias spring (according to the "mouse trap" principle);
- the contact sensor preferably comprises a strap as described above.

The invention is also directed to an use of the device of the invention as described above, for mounting the device onto an energized overhead power line, comprising the following steps:
- positioning said device in the vicinity of the overhead power line, e.g. within a distance to the overhead power line corresponding to 4 times the length of the device, preferably 2 times the length of the device, and e.g. above or beneath said overhead power line, with the halves of the casing pre-biased in an open position, with inner sides of the halves of the casing facing the overhead power line, the axis of rotation of the hinge mechanism being parallel to the overhead power line ;
- moving the device toward the overhead power line, e.g. downwardly or upwardly, and engaging the overhead power line by means of the at least one strap until the device automatically closes ;
- releasing the device clamped on the overhead power line.

The invention is also directed to an alternative use of the device of the invention as described above, for mounting the device onto an energized overhead power line, comprising the following steps:
- positioning said device in the vicinity of the overhead power line, e.g. within a distance to the overhead power line corresponding to 4 times the length of the device, preferably 2 times the length of the device , and e.g. above or beneath said overhead power line, and then moving, e.g. downwardly, said device towards the overhead power line with the two halves of the casing pre-biased in a closed position, in such a manner that the overhead power line engages with a groove made of protuberances at the two halves for forcing the opening of the halves of the casing ;
- moving further, e.g. downwardly, the device for forcing the opening of the halves and engaging the overhead power line by means of the at least one strap, so that the device closes again and automatically ;
- releasing the device clamped on the overhead power line.

Preferably, the device is positioned by a drone. Alternatively, the device can be positioned by a person electrically insulated from ground.

The invention can also be directed to a device adapted to be mounted onto an overhead power line, comprising a casing, the casing being composed of at least a first half and a second half, said halves being linked by a mechanism positioned there between, preferably the mechanism comprising at least one hinge having an axis of rotation along a proximal end of the first half of the casing and a proximal end of the second half of the casing, the mechanism being arranged so that said halves are held in at least an open position, creating an opening in which said line can be guided and positioned and a closed position, in which said halves are mated, characterised in that the device additionally comprises at least one strap, through which the halves of the casing are further connected to each other, said strap being configured to mate also with said overhead power line in order to perform a clamping of the device onto said line, wherein a length of the at least one strap is determined for allowing the halves of the casing to surround said line when the halves of the casing automatically close due to an automatic mechanical closing mechanism triggered by a contact sensor detecting a contact with said line, wherein the energy necessary to close the halves is stored in a pre-bias spring (according to the "mouse trap" principle), the contact sensor preferably comprising said strap.

The present invention is advantageous since it provides a simple and cost-effective solution, and since it does not need complex adaptations. Furthermore, the time required to install the device is reduced because the clamping operation is automatic. It saves both space and weight, allowing to embark more electronics and/or to reduce the size of the device. Finally, the device can automatically and advantageously wrap around the overhead power line without complex tools.

In general, the preferred embodiments of each subject-matter of the invention are also applicable to the other subject-matters of the invention. As far as possible, each subject-matter of the invention is combinable with other subject-matter. The features of the invention are also combinable with the embodiments of the description, which in addition are combinable with each other.

### Brief description of the figures

Aspects of the present invention will now be described in more details with reference to the appended drawings, wherein same reference numerals illustrate same features and wherein :
Figure 1 schematically represents a device according to the invention suspended by a drone before being clamped onto an overhead power line.
Figure 2 is a schematic plane view of the device according to the invention with a casing, whose hinged halves are in a completely open position.
Figures 3a, 3b and 3c schematically show the successive steps of mounting the device according to a first embodiment of the invention onto the overhead power line.
Figures 4a, 4b and 4c schematically show the successive steps of mounting the device according to a second embodiment of the invention onto the overhead power line ("peg" solution).

### Description of Preferred Embodiments of the Invention

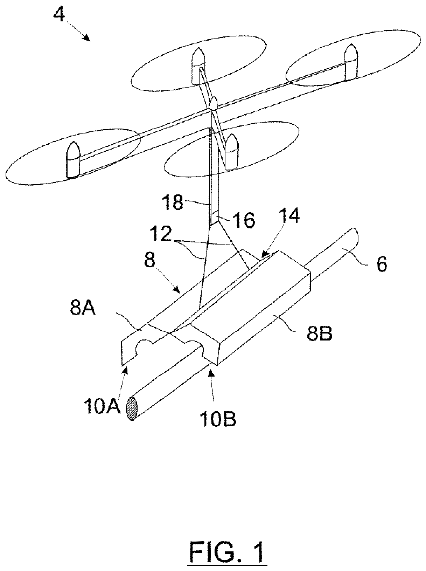

Fig. 1 is a perspective view of a device 2 according to an embodiment of the invention being suspended by an Unmanned Aerial Vehicle (UAV), commonly called a drone 4, before the device 2 is clamped onto an overhead power line 6. The device 2 comprises one or more sensors (not shown) to monitor the parameters of the overhead power line 6, such a device being also denominated as "smart" device. The invention is not limited to "smart" devices and can encompass other objects that are usually attached on overhead power line 6 such as coloured spheres for catching the attention of aviators or aviation (bird migration), optionally having a light source, such as Light Emitting Diode (LED).

The device 2 in Fig. 1 comprises a casing 8 defined by two generally symmetrical halves 8A, 8B connected in rotation by a hinge mechanism 14. Each half 8A, 8B of the casing 8 comprises a rim 10A, 10B respectively, said rim defining a sealing surface and two recesses, preferably semi-circular for receiving the overhead power line 6. In Fig. 1, the device 2 is in an open position with inner sides of the two halves 8A, 8B of the casing 8 facing the ground. Before the release of the device 2 onto the overhead power line 6, the device 2 can be positioned by the drone 4 vertically above the overhead power line 6 and oriented in such a manner that the tangent axis of the overhead power line 6 is under the pivot axis of the casing 2.

Fig. 1 shows that the mounting of the device 2 relies on a drone 4. Alternatively, the device 2 can be installed by a technician who is electrically isolated from the ground. For this purpose, a technician can operate on the overhead power line 6, for instance from a helicopter. As well, it could be foreseen that the device 2 can be installed by any other means provided that it is suitable for performing the installation, such as a robot.

The shape of the halves of the casing 8A, 8B is not limited to a common prismatic structure with a trapeze section such as shown in Fig. 1. For instance, the hinged halves 8A, 8B of the casing 8, e.g. under the form of shells, can be half cylindrical or half spherical. Any other shape can be considered for the halves of the casing 8A, 8B. It is however preferred that they present each rims 10A, 10B respectively that can be superimposed.

Additionally the device 2 comprises one or more attachment means as shown in Fig.1. The attachment means shown comprises two ropes 12 attached at two different locations on the hinge mechanism 14. The two ropes 12 are also connected at a common holding end 16, said end 16 being realisably attached to a commendable holding/releasing means 18, known per se of the skilled person. When the holding/releasing means 18 is commanded to detach the common holding end 16 and therefore the device 2, the device 2 will automatically be clamped onto the overhead power line 6, thanks to a strap 20 (that is hidden by the halves 8A, 8B of the casing 8 in Fig. 1). The common holding end 16 can remain attached to the device 2 after the release of the device. The number of ropes 12 is not limited to two ropes. An increased number of ropes 12 will be selected according to the circumstances. As an alternative, the ropes 12 can be directly connected to the halves 8A, 8B of the casing 8 (not shown). Equally, a hand grip (not shown) can be foreseen in case the device 2 is mounted by a technician. Furthermore, the device 2 can be lifted by a rigid arm (not shown) connected to the hinge mechanism 14 or to at least one of the halves 8A, 8B of the casing 8.

The two halves 8A, 8B of the casing 8 are connected via a hinge mechanism 14. The hinge mechanism 14 can comprise a single hinge or a plurality of hinges or equivalents. The or each hinge can be a barrel hinge, concealed hinged (with or without self-closing feature and/or with or without damping systems) or a living hinge.

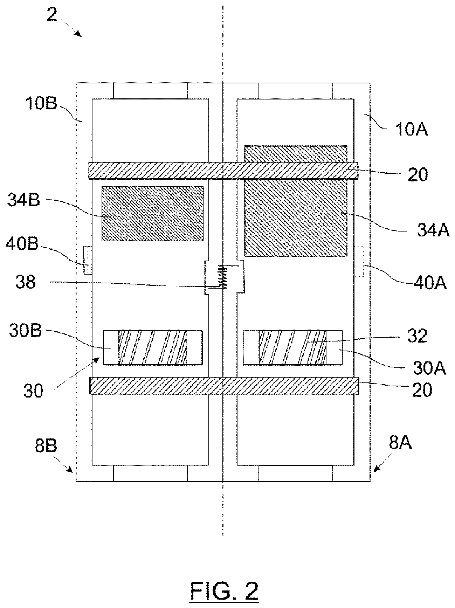

Fig. 2 shows the device 2 with the hinged halves 8A, 8B of the casing 8 open. Each half 8A, 8B of the casing 8 respectively comprises a half 30A, 30B of a magnetic split-core 30. The split-core 30 is part of a split-core transformer with a winding 32 that will harvest from the overhead power line 6 the energy necessary for supplying power to the device 2. In Fig. 2, the halves 30A, 30B of a magnetic split-core 30 (transformer) are positioned in a substantial central position so that the holding forces will be applied sensibly symmetrically. This ensures a better sealing because of a substantially balanced distribution of the contact pressures between the superimposed rims 10A, 10B, when the casing 8 is closed. However, any other positions for the halves of the split-core transformer are also possible, especially to help accommodating the presence of accessories or parts such as at least a processor, a battery, a communication unit, which is preferably wireless, and/or one or more sensors for monitoring the overhead power line 6. Fig. 2 shows two modules 34A, 34B, one in each half 8A, 8B of the casing 8. For example the first module 34A can comprise the processor and the communication unit, which is preferably wireless, and the other module 34B can comprise the battery and the sensor(s). Of course, the example of Fig. 2 is a mere example not limiting the scope of the invention, as the skilled person knows how to arrange one or more components (processor, sensor, battery, communication unit, possibly other elements) directly in the casing 8, or in one or more modules 34A, 34B according to the circumstances or needs.

The example in Fig. 2 also shows a split-core transformer. Such a transformer serves to harvest the energy needed for the powering of the device 2. For instance, the energy harvested by the monitoring device 2 can be used to supply current to one or more sensors or the processor. The energy can also be used for a light source for warning aviators at night about the presence of an overhead power line 6. The harvested energy can be stored in the (back-up) battery. The number of split-core transformers may vary depending on the circumstances. As to the attachment of the device 2 to the power line, two pairs of halves 30A, 30B of a split-core transformer provide a more secure clamping than a single pair of halves 30A, 30B of the same split-core transformer. The shape of the split-core 30 can be a torus with a centre line shaped as a square, rectangle or circle. Alternatively, or complementarily, a simple magnetic split-core 30 can be used as a simple clamping solution. A "magnetic" split-core 30 means that the split-core 30 is made of a material having ferromagnetic properties.

The device 2 shown in Fig. 2 also presents two straps or flat cables 20, preferably of synthetic material with good electrical insulation properties, such as polyimide. The purpose of one or more straps 20 is to align, guide and limit the overhead power line excursion inside the casing 8 during the coupling thereof. Alternative to a strap solution such a chain-based solution can also be envisaged. Also, the invention is not limited to a pair of straps 20 ; of course a single strap 20 or more than two straps 20 can also be used. In case a strap 20 is selected with a certain level of resistance to flexion, the strap 20 can be pre-constrained so as to bias the hinged halves 8A, 8B of the casing 8 into an open position or closed position, according to the needs. In Fig.2, the opposing ends of each strap 20 are fixed to the respective distal ends of each half 8A, 8B of the casing 8. More specifically, the rims 10A, 10B shown in Fig. 2 present recesses for receiving the ends of each strap 20. At least one strap 20 is positioned adjacent, preferably directly next to the halves 30A, 30B of the magnetic split-core 30 so as to facilitate the positioning and guidance of the two split-core onto the overhead power line 6. The more straps 20 are used, the better the device 2 is guided and positioned onto the overhead power line 6. Instead of a multiple strap solution, a large strap 20 can be alternately used, as long as it does not overlap with the halves 30A, 30B of the split-core 30. Otherwise, the strap 20 would hinder positioning of the overhead power line 6 into the cavity formed by the magnetic split-core 30.

The device 2 can be used to monitor an overhead power line 6, especially it can help to run the overhead power line 6 to its full capacity through recording in situ and in real time one or more parameters of the overhead power line 6 such as the temperature or the current of the overhead power line 6. The data gathered in real time allow energy grid operators to optimise the use of the overhead power line 6 to its full capacity, whatever the atmospheric conditions are. For this purpose, a processor, a communication unit, a battery and at least one sensor for detecting conditions on the power line can be assembled into the device 2. The at least one sensor can comprise a current sensor arranged inside one of the half of the casing 8A, 8B. The at least one sensor can comprise an accelerometer, a temperature sensor, a magnetic field sensor, an electric field sensor, a mechanical tension sensor, a camera, or any combination thereof.

In some embodiments, the device 2 in Fig. 2 comprises a rib (not shown) extending from a bottom of an inner side of one of the halves 8A, 8B of the casing 8. The purpose of the rib is to prevent the rotation of the device 2 once it is mounted on the overhead power line 6. Indeed, an edge of the rib is in friction contact with the cable of the overhead power line 6 when the device 2 is attached to the power head line 6. One or more ribs 36 can be used depending on the needs. As an alternative or complementary to the rib solution, at least a screw clamp mechanism (not shown), a spring configured to span across the split-core transformer and/or an elastomeric grip pad (not shown) can be additionally selected to prevent a rotation of the device 2 on the overhead power line 6. Such a spring is configured to span across the split-core transformer and is pre-biased to bend or expand so as to press a portion of the overhead power line 6 against the magnetic split-core 30 of the transformer.

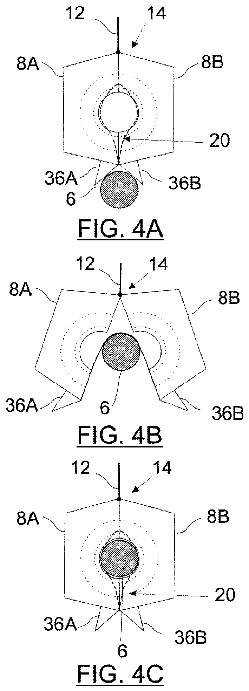

Furthermore, the halves 8A, 8B of the casing 8 in Fig. 2 comprises a torsion spring 38 to bias the two halves 8A, 8B of the casing 8 in an open position. The invention is not limited to the use of a torsion spring 38. Any other biasing means suitable for accommodating the halves 8A, 8B of the casing 8 can be used. Alternatively, the two hinged halves 8A, 8B of the casing 8 may be biased in closed position as shown in Fig. 4a, Fig. 4b and Fig. 4c. Still alternatively, the or another spring such as a torsion spring can be used to damp the attraction forces of the two halves 30A, 30B of the magnetic split-core 30.

The device 2 can also comprise a means for forcing the opening the hinged halves 8A, 8B of the casing 8 when the device 2 needs to be removed from the overhead power line 6. A screw worn or a cam mechanism can be selected for this function. The means for forcing the opening the hinged halves 8A, 8B of the casing 8 must be capable of separating the (transformer) split-core 30 faces which are under high magnetic attraction.

The device 2 may comprise a sealing means such as an elastic or foam stripe attached to the rims 10A, 10B of the halves 8A, 8B of the casing 8. The sealing means can also serve to damp the bump resulting from the contact of the two halves of the casing 8A, 8B, during their closure.

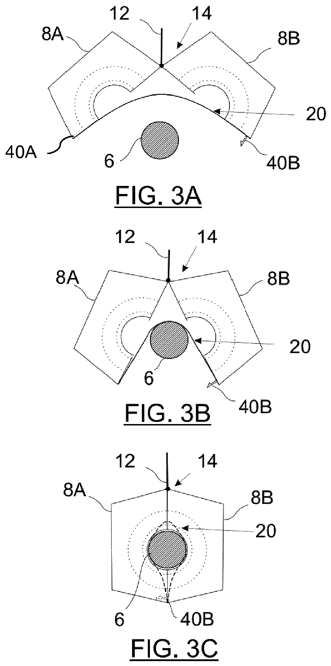

Fig. 3a, 3b and 3c show how the device 2 is mounted and adjusted onto an active power line 6 (i.e. energized). Fig. 3a illustrates a preparation phase where the device 2 is in an open position with the rotation axis of the hinge mechanism 14 located above the overhead power line 6. Fig. 3a exhibits at least one strap 20 with a predefined shape at rest. Alternatively, a loose strap can be considered for the invention as well. After the preparation phase, the device 2 is moved downwardly, preferably in a slow manner. As shown in Fig. 3b, when the at least one strap 20 engages with the overhead power line 6, the strap 20 wraps around the conductor and forces the two halves 8A, 8B to approach, a closing torque being exerted on them. By suitably calculating the length of the strap, the line position can also be controlled so that it stops in the middle of the casing (or at the centre of gravity thereof). When the overhead power line 6 is encircled by the opposing two halves 30A, 30B of the magnetic split-core 30, a magnetic field is induced by the active overhead power line 6 in the magnetic split-core 30 forming a magnetic circuit. The attracting forces between the opposing two halves 30A, 30B of the magnetic split-core 30 is an expression of the existence of the continuous magnetic circuit generated by the overhead power line 6. The length of the at least one strap 20 is determined so that the overhead power line 6 is located vertically at about the same height as the centres the two halves 30A, 30B of the magnetic split-core 30 while the at least one strap 20 engages with the overhead power line 6. During the final phase in the descent of the device 2 shown in Fig. 3c, the gaps between the opposing two halves 30A, 30B of the split-core 30 reduce, occasioning an increase of the attractive forces between the two halves 30A, 30B of the magnetic split-core. The attractive forces become maximal when the two halves 30A, 30B of the split-core 30 get in direct contact, which assures self-closing of the device. In this final stage, the overhead power line 6 is suitably positioned in the cavity formed by the two halves 30A, 30B of the magnetic split-core 30.

Besides the length, the characteristics of the at least one strap 20 such as the section or material can be selected to ensure that the overhead power line 6 is suitably positioned between both ends of the two halves 30A, 30B of the magnetic split-core 30 of the transformer in the cavity defined by the two halves 30A, 30B during the closing of the casing 8. The at least one strap 20 can be made of a non-conducting flexible synthetic material such as polyimide.

The embodiment of Fig. 2, 3a, 3b and 3c shows the presence of a snap fit 40 with a male portion 40B attached to a distal end of a half of the casing 8A, 8B, while a female portion 40A is attached to a distal end of the other half of the casing 8A, 8B. The snap fit fixation serves to ensures that the casing 8 of the device 2 remains on the overhead power line 6 in case the power line 6 is temporarily deenergized.

The torsion spring 38 in the embodiment of Fig. 2, 3a, 3b and 3c is preferably pre-biased so to that the torsion spring 38 produces a torque that balances the torque induced by the weights of the halves 8A, 8B of the casing 8, so that to casing 8 remains open before the mounting thereof.

Fig 4a, 4b and 4c show an alternative to the embodiment of Fig. 3a, 3b and 3c. The main difference lies in the fact that the device 2 is biased in closed position before being positioned onto the overhead power line 6. This solution is similar to and behaves like a peg. As shown in Fig. 4a, when the device 2 moves downward, guiding ramps 36A, 36B get in contact with the cable of the overhead power line 6. At this stage, the attracting forces of the halves 30A, 30B of the magnetic split-core 30 are predetermined, e.g. at a level sufficient to hold the halves 8A, 8B of the casing 8 together or absent attracting forces, via a pre-magnetization or not prior to the installation. A further motion downward of the device 2 opens the hinged halves of the casing 8A, 8B. At this stage, the attracting forces of the halves 30A, 30B of the magnetic split-core 30 reduce (if the halves were pre-magnetized) , because of the presence of an air gap between halves 30A, 30B of the magnetic split-core 30 during this phase. This reduction continues as long as the halves 30A, 30B of the magnetic split-core 30 do not start to encircle the overhead power line 6.

At the moment when the at least one strap 20 engages with the overhead power line 6, both pre-biased halves 8A, 8B of the casing 8 exert opposite torques that force the closing of the hinged halves of the casing 8A, 8B, as shown in Fig. 4b. When the overhead power line 6 is encircled by the opposing two halves 30A, 30B of the magnetic split-core 30, the magnetic field generated by the current of the overhead power line 6 induces strong attracting forces between the opposing two halves 30A, 30B of the magnetic split-core 30. At a certain stage in the descent, the overhead power line 6 is at about the same level than a median horizontal plan defined by the two halves 30A, 30B of the magnetic split-core 30. At this moment, the gap between the opposing two halves 30A, 30B of the split-core transformer reduces, occasioning an increase of the attractive forces between the two halves 30A, 30B of the split-core transformer. Then, the two halves 30A, 30B of the magnetic split-core 30 get in direct contact with a portion of the overhead power line 6 occupying the cavity formed by the magnetic split-core 30.

In a third embodiment (being not part of the instant invention), the hinge 14 linking the first and second haves 8A, 8B can be replaced by a sliding mechanism (not shown) allowing a parallel displacement between the two halves 8A, 8B of the casing 8. Preferably, the two halves 8A, 8B are pre-biased in an open position. The sliding mechanism is preferably positioned on one side of the casing 8. On the other side of the casing, the two halves are arranged to form a passage for introducing and guiding the overhead power line 6 into the casing 8, for example using one or more straps 20 as above.

### List of reference symbols

- 2: monitoring or warning device
- 4: drone
- 6: overhead power line
- 8: casing
- 8A, 8B: halves of the casing
- 10A, 10B: rims
- 12: rope
- 14: hinge, mechanism
- 16: holding end
- 18: holding/releasing means
- 20: strap
- 30: magnetic split-core
- 30A, 30B: halves of the magnetic split-core
- 32: transformer winding
- 34A, 34B: device modules
- 36A, 36B: guiding ramps
- 38: torsion spring
- 40A: female snap fit
- 40B: male snap fit

## Claims

1. A device (2) adapted to be mounted onto a energized overhead power line (6), comprising a casing (8), the casing (8) being composed of at least a first half and a second half (8A, 8B), said halves (8A, 8B) being linked by a mechanism (14) positioned there between, wherein the mechanism (14) is positioned between a proximal end of the first half (8A) of the casing (8) and a proximal end of the second half (8B) of the casing (8), wherein the mechanism (14) comprises at least one hinge having an axis of rotation along the proximal end of the first half (8A) of the casing (8) and the proximal end of the second half (8B) of the casing (8), the mechanism (14) being arranged so that said halves (8A, 8B) are held in at least an open position, creating an opening in which said line (6) can be guided and positioned and a closed position, in which said halves (8A, 8B) are mated, wherein said halves (8A, 8B) respectively comprise a first half (30A) and a second half (30B) of a magnetic split-core (30),
**characterised in that** the device (2) comprises at least one strap (20), through which the halves (8A, 8B) of the casing (8) are further connected to each other, said strap being configured to also mate with said overhead power line (6) in order to perform a clamping of the device (2) onto said line (6), when said line is energized, wherein a length of the at least one strap (20) is determined for allowing the at least one strap (20) to guide and align the power line (6) excursion between the halves (8A, 8B) of the casing (8), so that said halves (8A, 8B) are triggered in the closed position when the halves (30A, 30B) of the magnetic split-core surround said line (6) due to an electromagnetic attraction between the halves (30A, 30B) of said split-core (30),
wherein an end of the at least one strap (20) is connected to a distal end of the first half (8A) of the casing (8) and the other end of said strap (20) is connected to a distal end of the second half (8B) of the casing (8), and
wherein each half (8A, 8B) of the casing (8) has the form of a shell delimited by a rim (10A, 10B), wherein the ends of the at least one strap (20) are connected to the respective rims (10A, 10B).

2. The device (2) according to claim 1, wherein a median line of the at least one strap (20) extends in a plane perpendicular to the rotation axis of the hinge mechanism (14), and wherein the centre of the at least one strap (20) is positioned in a median plane of the casing (8), said plane comprising the rotation axis of the hinge mechanism (14) and/or wherein the central axis of the magnetic split-core (30) is parallel to the rotation axis of the hinge mechanism (14) when the casing (8) is in the closed position, and wherein the at least one strap (20) is positioned adjacent to the first and second halves (30A, 30B) of the magnetic split-core (30) in the direction of the rotation axis of the hinge mechanism (14).

3. The device (2) according to anyone of the preceding claims, wherein the device (2) further comprises a transformer, the transformer comprising the first and second halves (30A, 30B) of the magnetic split-core (30).

4. The device (2) according to anyone of the preceding claims, wherein each half (30A, 30B) of the magnetic split-core (30) is shaped as a half torus, each half of said split-core (30) presenting two flat ends, wherein the two halves (30A, 30B) of said split-core define a magnetic circuit with no air gap when the two ends of the first half (30A) of the magnetic split-core are respectively facing the two ends of the second half (30B) of the magnetic split-core (30).

5. The device (2) according to anyone of the preceding claims, wherein the device (2) further comprises a processor, a communication unit, a battery and at least one sensor for detecting one or more conditions on the overhead power line (6), or any combination thereof, wherein the at least one sensor comprises a current sensor, an accelerometer, a temperature sensor, a magnetic field sensor, a mechanical tension sensor or a camera, a Lidar (Light Detection and Ranging), or any combination thereof.

6. The device (2) according to anyone of the preceding claims, wherein the device (2) comprises a resilient element, preferably a spring (38) interposed between the two halves of the casing (8) to bias the two halves (8A, 8B) of the casing (8) in a predefined position before the mounting thereof.

7. The device (2) according to anyone of the claims 1 to 6, wherein the device (2) comprises at least one snap fit with a male portion (40B) being attached to the distal end of the first half (8A) of the casing (8) and a female portion (40A) being attached to the distal end of the second half (8B) of the casing (8) or vice versa.

8. The device (2) according to anyone of the claims 1 to 6, wherein the distal end of the first half (8A) of the casing (8) and the distal end of the second half (8B) of the casing (8) each comprise a cut off and/or a ramp (36A, 36B) defining a groove for forcing the opening of the halves (8A, 8B) of the casing (8).

9. An use of the device (2) according to anyone of the claims 1 to 7 for mounting said device onto an energized overhead power line (6), comprising the following steps:
- positioning said device (2) in the vicinity of the overhead power line (6) with the halves (8A, 8B) of the casing (8) pre-biased in an open position, with inner sides of the halves (8A, 8B) of the casing (8) facing the overhead power line (6), the axis of rotation of the hinge mechanism (14) being parallel to the overhead power line (6);
- moving the device (2) towards said power line (6) and engaging the overhead power line (6) by means of the at least one strap (20) until the device (2) automatically closes ;
- releasing the device (2) clamped on the overhead power line (6).

10. An use of the device (2) according to claim 8 for mounting said device onto an energized overhead power line (6), comprising the following steps:
- positioning said device (2) in the vicinity of the overhead power line (6) and then moving said device (2) towards the overhead power line (6) with the two halves (8A, 8B) of the casing (8) pre-biased in a closed position, in such a manner that the overhead power line (6) engages with the groove for forcing the opening of the halves (8A, 8B) of the casing (8) ;
- moving further the device (2) for forcing the opening of the halves (8A, 8B) and engaging the overhead power line (6) by means of the at least one strap (20) until the device (2) closes again and automatically ;
- releasing the device (2) clamped on the overhead power line (6).

11. The use according to claim 9 or 10, wherein the device (2) is positioned by a drone (4) or wherein the device (2) is positioned by a person electrically insulated from ground.

## Patentansprüche

1. Vorrichtung (2), die dazu ausgelegt ist, auf einer unter Spannung stehenden Hochspannungsleitung (6) montiert zu werden, die ein Gehäuse (8) umfasst, wobei das Gehäuse (8) aus mindestens einer ersten Hälfte und einer zweiten Hälfte (8A, 8B) besteht, wobei die Hälften (8A, 8B) durch einen zwischen ihnen positionierten Mechanismus (14) verbunden sind, wobei der Mechanismus (14) zwischen einem proximalen Ende der ersten Hälfte (8A) des Gehäuses (8) und einem proximalen Ende der zweiten Hälfte (8B) des Gehäuses (8) positioniert ist, wobei der Mechanismus (14) mindestens ein Drehgelenk mit einer Drehachse entlang des proximalen Endes der ersten Hälfte (8A) des Gehäuses (8) und des proximalen Endes der zweiten Hälfte (8B) des Gehäuses (8) umfasst, und der Mechanismus (14) so angeordnet ist, dass die Hälften (8A, 8B) in mindestens einer offenen Position, in der eine Öffnung gebildet wird, in der die Leitung (6) geführt und positioniert werden kann, und einer geschlossenen Position, in der die Hälften (8A, 8B) zusammengepasst sind, gehalten werden, wobei die Hälften (8A, 8B) eine erste Hälfte (30A) bzw. eine zweite Hälfte (30B) eines magnetischen Spaltkerns (30) umfassen,
**dadurch gekennzeichnet, dass** die Vorrichtung (2) mindestens einen Riemen (20) umfasst, durch den die Hälften (8A, 8B) des Gehäuses (8) weiter miteinander verbunden sind, wobei der Riemen so ausgelegt ist, dass er ebenfalls mit der Hochspannungsleitung (6) zusammengepasst wird, um ein Klemmen der Vorrichtung (2) auf die Leitung (6) durchzuführen, wenn die Leitung unter Spannung steht, wobei eine Länge des mindestens einen Riemens (20) so bestimmt wird, dass sie ermöglicht, dass der mindestens eine Riemen (20) die Auslenkung der Hochspannungsleitung (6) zwischen den Hälften (8A, 8B) des Gehäuses (8) führt und ausrichtet, sodass die Hälften (8A, 8B) in die geschlossene Position gebracht werden, wenn die Hälften (30A, 30B) des magnetischen Spaltkerns die Leitung (6) aufgrund einer elektromagnetischen Anziehung zwischen den Hälften (30A, 30B) des Spaltkerns (30) umschließen,
wobei ein Ende des mindestens einen Riemens (20) mit einem distalen Ende der ersten Hälfte (8A) des Gehäuses (8) verbunden ist und das andere Ende des Riemens (20) mit einem distalen Ende der zweiten Hälfte (8B) des Gehäuses (8) verbunden ist, und
wobei jede Hälfte (8A, 8B) des Gehäuses (8) die Form einer Schale aufweist, die durch einen Rand (10A, 10B) begrenzt ist, wobei die Enden des mindestens einen Riemens (20) mit den jeweiligen Rändern (10A, 10B) verbunden sind.

2. Vorrichtung (2) nach Anspruch 1,wobei eine Medianlinie des mindestens einen Riemens (20) in einer Ebene senkrecht zur Drehachse des Drehgelenkmechanismus (14) verläuft, und wobei die Mitte des mindestens einen Riemens (20) in einer Medianebene des Gehäuses (8) positioniert ist, wobei die Ebene die Drehachse des Drehgelenkmechanismus (14) umfasst und/oder wobei die Mittelachse des magnetischen Spaltkerns (30) parallel zur Drehachse des Drehgelenkmechanismus (14) ist, wenn das Gehäuse (8) in der geschlossenen Position ist, und wobei der mindestens eine Riemen (20) benachbart zu der ersten und der zweiten Hälfte (30A, 30B) des magnetischen Spaltkerns (30) in der Richtung der Drehachse des Drehgelenkmechanismus (14) positioniert ist.

3. Vorrichtung (2) nach einem der vorhergehenden Ansprüche, wobei die Vorrichtung (2) ferner einen Transformator umfasst, wobei der Transformator die erste und die zweite Hälfte (30A, 30B) des magnetischen Spaltkerns (30) umfasst.

4. Vorrichtung (2) nach einem der vorhergehenden Ansprüche, wobei jede Hälfte (30A, 30B) des magnetischen Spaltkerns (30) als ein Halbtorus geformt ist, wobei jede Hälfte des Spaltkerns (30) zwei flache Enden aufweist, wobei die beiden Hälften (30A, 30B) des Spaltkerns einen Magnetkreis ohne Luftspalt definieren, wenn die beiden Enden der ersten Hälfte (30A) des geteilten Magnetkerns jeweils den beiden Enden der zweiten Hälfte (30B) des magnetischen Spaltkerns (30) gegenüberliegen.

5. Vorrichtung (2) nach einem der vorhergehenden Ansprüche, wobei die Vorrichtung (2) ferner einen Prozessor, eine Kommunikationseinheit, eine Batterie und mindestens einen Sensor zum Erfassen eines oder mehrerer Zustände der Hochspannungsleitung (6) oder eine beliebige Kombination davon umfasst, wobei der mindestens eine Sensor einen Stromsensor, einen Beschleunigungsmesser, einen Temperatursensor, einen Magnetfeldsensor, einen Sensor für mechanische Spannung oder eine Kamera, ein Lidar (Light Detection and Ranging) oder eine beliebige Kombination davon umfasst.

6. Vorrichtung (2) nach einem der vorhergehenden Ansprüche,
wobei die Vorrichtung (2) ein elastisches Element, vorzugsweise eine Feder (38), umfasst, das zwischen den beiden Hälften des Gehäuses (8) eingefügt ist, um die beiden Hälften (8A, 8B) des Gehäuses (8) vor der Montage davon in einer vordefinierten Position vorzuspannen.

7. Vorrichtung (2) nach einem der Ansprüche 1 bis 6, wobei die Vorrichtung (2) mindestens einen Schnappverschluss mit einem Steckteil (40B), das am distalen Ende der ersten Hälfte (8A) des Gehäuses (8) angebracht ist, und einem Buchsenteil (40A), das am distalen Ende der zweiten Hälfte (8B) des Gehäuses (8) angebracht ist, oder umgekehrt umfasst.

8. Vorrichtung (2) nach einem der Ansprüche 1 bis 6, wobei das distale Ende der ersten Hälfte (8A) des Gehäuses (8) und das distale Ende der zweiten Hälfte (8B) des Gehäuses (8) jeweils einen Ausschnitt und/oder eine Rampe (36A, 36B) umfassen, die eine Nut zum Erzwingen des Öffnens der Hälften (8A, 8B) des Gehäuses definieren.

9. Verwendung der Vorrichtung (2) nach einem der Ansprüche 1 bis 7 zum Montieren der Vorrichtung auf einer unter Spannung stehenden Hochspannungsleitung (6), umfassend die folgenden Schritte:
- Positionieren der Vorrichtung (2) in der Nähe der Hochspannungsleitung (6), wobei die Hälften (8A, 8B) des Gehäuses (8) in einer offenen Position vorgespannt sind, die Innenseiten der Hälften (8A, 8B) des Gehäuses (8) der Hochspannungsleitung (6) gegenüberliegen, und die Drehachse des Drehgelenkmechanismus (14) parallel zur Hochspannungsleitung (6) ist;
- Bewegen der Vorrichtung (2) zur Hochspannungsleitung (6) und In-Eingriff-bringen der Hochspannungsleitung (6) mittels des mindestens einen Riemens (20), bis die Vorrichtung (2) sich automatisch schließt;
- Freigeben der auf die Hochspannungsleitung (6) geklemmten Vorrichtung (2).

10. Verwendung der Vorrichtung (2) nach Anspruch 8 zum Montieren der Vorrichtung auf einer unter Spannung stehenden Hochspannungsleitung (6), umfassend die folgenden Schritte:
- Positionieren der Vorrichtung (2) in der Nähe der Hochspannungsleitung (6) und Bewegen der Vorrichtung (2) zur Hochspannungsleitung (6), wobei die beiden Hälften (8A, 8B) des Gehäuses (8) in einer geschlossenen Position vorgespannt sind, derart dass die Hochspannungsleitung (6) in die Nut zum Erzwingen des Öffnens der Hälften (8A, 8B) des Gehäuses (8) eingreift;
- Weiterbewegen der Vorrichtung (2) zum Erzwingen des Öffnens der Hälften (8A, 8B) und In-Eingriff-bringen der Hochspannungsleitung (6) mittels des mindestens einen Riemens (20), bis die Vorrichtung (2) sich erneut und automatisch schließt;
- Freigeben der auf die Hochspannungsleitung (6) geklemmten Vorrichtung (2).

11. Verwendung nach Anspruch 9 oder 10, wobei die Vorrichtung (2) durch eine Drohne (4) positioniert wird, oder wobei die Vorrichtung (2) von einer Person positioniert wird, die von der Erde elektrisch isoliert ist.

## Revendications

1. Dispositif (2) adapté pour être installé sur une ligne électrique aérienne sous tension (6), comprenant un boîtier (8), le boîtier (8) étant composé d'au moins une première moitié et une seconde moitié (8A, 8B), lesdites moitiés (8A, 8B) étant reliées par un mécanisme (14) positionné entre elles, dans lequel le mécanisme (14) est positionné entre une extrémité proximale de la première moitié (8A) du boîtier (8) et une extrémité proximale de la seconde moitié (8B) du boîtier (8), dans lequel le mécanisme (14) comprend au moins une charnière ayant un axe de rotation le long de l'extrémité proximale de la première moitié (8A) du boîtier (8) et de l'extrémité proximale de la seconde moitié (8B) du boîtier (8), le mécanisme (14) étant prévu de sorte que lesdites moitiés (8A, 8B) soient maintenues dans au moins une position ouverte, créant une ouverture dans laquelle ladite ligne (6) peut être guidée et positionnée, et une position fermée, dans laquelle lesdites moitiés (8A, 8B) sont accouplées, dans lequel lesdites moitiés (8A, 8B) comprennent respectivement une première moitié (30A) et une seconde moitié (30B) d'un noyau magnétique divisé (30),
**caractérisé en ce que** le dispositif (2) comprend au moins une lanière (20), par laquelle les moitiés (8A, 8B) du boîtier (8) sont également reliées l'une à l'autre, ladite lanière étant configurée pour s'accoupler également à la dite ligne électrique aérienne (6) afin de procéder à un serrage du dispositif (2) sur ladite ligne (6), lorsque ladite ligne est sous tension, dans lequel une longueur de la au moins une lanière (20) est déterminée de façon à permettre à la au moins une lanière (20) de guider et d'aligner l'excursion de la ligne électrique (6) entre les moitiés (8A, 8B) du boîtier (8), de sortes que lesdites moitiés (8A, 8B) soient basculées en position fermée lorsque les moitiés (30A, 30B) du noyau magnétique divisé entourent ladite ligne (6) en raison d'une attraction électromagnétique entre les moitiés (30A, 30B) dudit noyau magnétique divisé (30),
dans lequel une extrémité de la au moins une lanière (20) est reliée à une extrémité distale de la première moitié (8A) du boîtier (8) et l'autre extrémité de ladite lanière (20) est reliée à une extrémité distale de la seconde moitié (8B) du boîtier (8), et
dans lequel chaque moitié (8A, 8B) du boîtier (8) possède la forme d'une coque délimitée par un rebord (10A, 10B), dans lequel les extrémités de la au moins une lanière (20) sont reliées aux rebords respectifs (10A, 10B).

2. Dispositif (2) selon la revendication 1, dans lequel une ligne médiane de la au moins une lanière (20) s'étend sur un plan perpendiculaire à l'axe de rotation du mécanisme de charnière (14), et dans lequel le centre de la au moins une lanière (20) est positionné sur un plan médian du boîtier (8), ledit plan comprenant l'axe de rotation du mécanisme de charnière (14) et/ou dans lequel l'axe central du noyau magnétique divisé (30) est parallèle à l'axe de rotation du mécanisme de charnière (14) lorsque le boîtier (8) est en position fermée, et dans lequel la au moins une lanière (20) est positionnée de manière adjacente aux première et seconde moitiés (30A, 30B) du noyau magnétique divisé (30) dans la direction de l'axe de rotation du mécanisme de charnière (14).

3. Dispositif (2) selon l'une quelconque des revendications précédentes, dans lequel le dispositif (2) comprend en outre un transformateur, le transformateur comprenant les première et seconde moitiés (30A, 30B) du noyau magnétique divisé (30).

4. Dispositif (2) selon l'une quelconque des revendications précédentes, dans lequel chaque moitié (30A, 30B) du noyau magnétique divisé (30) possède la forme d'un demi-tore, chaque moitié dudit noyau divisé (30) présentant deux extrémités plates, dans lequel les deux (30A, 30B) moitiés dudit noyau divisé définissent un circuit magnétique sans aucun entrefer lorsque les deux extrémités de la première moitié (30A) du noyau magnétique divisé font respectivement face aux deux extrémités de la seconde moitié (30B) du noyau magnétique divisé (30).

5. Dispositif (2) selon l'une quelconque des revendications précédentes, dans lequel le dispositif (2) comprend en outre un processeur, une unité de communication, une batterie et au moins un capteur destiné à détecter une ou plusieurs condition(s) sur la ligne électrique aérienne (6), ou n'importe quelle combinaison de ceux-ci, dans lequel le au moins un capteur comprend un capteur de courant, un capteur d'accélération, un capteur de température, un capteur de champ magnétique, un capteur de champ électrique ou une caméra, un Lidar (Light Detection and Ranging), ou n'importe quelle combinaison de ceux-ci.

6. Dispositif (2) selon l'une quelconque des revendications précédentes, dans lequel le dispositif (2) comprend un élément flexible, de préférence un ressort (38) interposé entre les deux moitiés du boîtier (8) afin d'incliner les deux moitiés (8A, 8B) du boîtier (8) dans une position prédéterminée avant l'installation de celui-ci.

7. Dispositif (2) selon l'une quelconque des revendications 1 à 6, dans lequel le dispositif (2) comprend au moins un système d'assemblage par pression avec une partie mâle (40B) reliée à l'extrémité distale de la première moitié (8A) du boîtier (8) et une partie femelle (40A) reliée à l'extrémité distale de la seconde moitié (8B) du boîtier (8) ou inversement.

8. Dispositif (2) selon l'une quelconque des revendications 1 à 6, dans lequel l'extrémité distale de la première moitié (8A) du boîtier (8) et l'extrémité distale de la seconde moitié (8B) du boîtier (8) comprennent chacune une découpe et/ou un plan incliné (36A, 36B) qui définit une rainure pour forcer l'ouverture des moitiés (8A, 8B) du boîtier (8).

9. Utilisation du dispositif (2) selon l'une quelconque des revendications 1 à 7 pour installer ledit dispositif sur une ligne électrique aérienne sous tension (6), comprenant les étapes suivantes :
- le positionnement dudit dispositif (2) à proximité de la ligne électrique aérienne (6) avec les moitiés (8A, 8B) du boîtier (8) pré-inclinées dans une position ouverte, avec les faces internes des moitiés (8A, 8B) du boîtier (8) tournées vers la ligne électrique aérienne (6), l'axe de rotation du mécanisme de charnière (14) étant parallèle à la ligne électrique aérienne (6) ;
- le déplacement du dispositif (2) vers la ligne électrique aérienne (6) et l'engagement de la ligne électrique aérienne (6) à l'aide de la au moins une lanière (20) jusqu'à ce que le dispositif (2) se ferme automatiquement ;
- la libération du dispositif (2) serré sur la ligne électrique aérienne (6).

10. Utilisation du dispositif (2) selon la revendication 8 afin d'installer ledit dispositif sur une ligne électrique aérienne sous tension (6), comprenant les étapes suivantes :
- le positionnement dudit dispositif (2) à proximité de la ligne électrique aérienne (6) puis le déplacement dudit dispositif (2) vers la ligne électrique aérienne (6) avec les deux moitiés (8A, 8B) du boîtier (8) pré-inclinées dans une position fermée, de sorte que la ligne électrique aérienne (6) s'engage avec la rainure afin de forcer l'ouverture des moitiés (8A, 8B) du boîtier (8) ;
- le déplacement du dispositif (2) afin de forcer l'ouverture des moitiés (8A, 8B) et l'engagement de la ligne électrique aérienne (6) à l'aide de la au moins une lanière (20) jusqu'à ce que le dispositif (2) se ferme à nouveau et automatiquement ;
- la libération du dispositif (2) serré sur la ligne électrique aérienne (6).

11. Utilisation du dispositif (2) selon la revendication 9 ou 10, dans laquelle le dispositif (2) est positionné par un drone (4) ou dans laquelle le dispositif (2) est positionné par une personne électriquement isolée du sol.
